# EUROPEAN PATENT APPLICATION

(11) **EP 0 602 296 A1**
(43) Date of publication of application: **22.06.1994**
(21) Application number: 92480198.8
(22) Date of filing: 17.12.1992
(51) Int. Cl.: G10L 5/06, G06F 15/38

(54) **Adaptive method for generating field dependant models for intelligent systems**

(71) Applicant: INTERNATIONAL BUSINESS MACHINES CORPORATION, Armonk, NY 10504 (US)
(72) Inventor: Merialdo, Bernard, F-06560 Valbonne (FR)
(74) Representative: de Pena, Alain

(57) **Abstract**

A system architecture made to enable providing human intelligible information by processing a flow of input data; e.g. converting speech (source information) into printable data (target information) based on target dependent probalistic models; and more particularly enable efficiently switching from one target field of information into another. To that end, the system is provided with a Language Modeling device including a Data Base (40) loadable with application dependent corpuses of words or symbols through a workstation (16); and a Language Modeling processor programmed to refresh, in practice, a tree organized model, efficiently, with no blocking situations, and at a reasonable cost.

## Description

### FIELD OF THE INVENTION

The present invention relates to intelligent machines, i.e. machines capable of providing human intelligible information by processing a flow of input data based on probabilistic models. It deals more particularly with a method for adaptively generating field dependent target models for such intelligent machines converting information from a source type of information into a target type of information.

### BACKGROUND OF THE INVENTION

The processing power of modern computers has tremendously increased over the last thirty, or so, years ; rendering therefore implementable and commercially marketable systems for performing a number of applications which were, up to now, just experimented with very large computers and yet unable to provide acceptable efficiency.

For instance one may already know about machines made to translate text from one language (source) into text in another language (target). Such machines make foreign language speaking operators able to communicate with each other without having to go through the hassle of studying foreign languages. Such a system has been described in a copending application: Method and System for Natural Language Translation, by Peter F. Brown et al filed on 07/10/92, (No: 92 111725.5). Another example deals with translating source information in a spoken form into target information in a printable or displayable or otherwise visually representable form.

The above are but few applications within a number of applications enabling not only easier communications between human beings, but also enabling man-to-machine communications, and vice-versa. For instance a system for performing direct dictation and translating speech into text at affordable prices would be rather appreciated by a large public.

The above applications involve automatic speech recognition and machine translation.

The initial approaches to both speech recognition and machine translation were both relying on so called hand written rules. For instance, most speech recognition systems were built around a set of rules of syntax, semantics and acoustic phonetics. One had first to discover a set of linguistic rules that can account for the vast complexity of language, and, secondly to construct a coherent framework in which these rules could be assembled to recognize speech. This approach proved to rise unsurmontable problems to write down by hand a set of rules that covered the vast scope of natural language and to construct by hand : priorities, weighting factors and logical conditions, for performing the various selections leading to the target.

The approach fortunatly switched to so called statistical techniques whereby rules are extracted automatically from large data bases of speech or text, and combining different types of linguistic operations via laws of probability theory. Basically, statistical approaches do exploit the fact that not all word sequences occur naturally with equal probability. Probabilistic models may then be constructed to be used later on, under normal operating conditions of the system.

These models have been shown to be useful for a number of different approaches such as those using: language modeling, to predict the next word from the previous ones; grammatical modeling, to predict the next part of speech from previous parts; spell-to-sound rules, to predict how a letter is pronounced depending on the context where it appears; allophone selection, to predict how a phone is pronounced depending on the context where it appears; morphological analysis, to predict the part of speech from the spelling of the word; etc, etc.

Obviously the problems, even if they are now deriving from a more rational consideration and therefore should lead to a more implementable system, are still complex. This should naturally impact on the final cost of the system.

In addition, one may easily understand from the above that the probabilistic approach of the problem is essentially context dependent. In other words, building a universal system is unthinkable. A system made for business or commercial field of applications, for instance, would not be applicable to legal matters or medical field.

Should therefore one need to switch from one field of application to another, for any reason including need to resale the system, or just need to expand the actual possibilities of the system involved, the operation for converting the system would be unthinkable at fairly reasonable cost, unless the architecture of the system was made accordingly and bearing in mind the above requirements and goals.

### SUMMARY OF THE INVENTION

One object of this invention is to provide a system architecture made to enable converting the target from one field of application to another field of application at fairly reasonable cost.

Another object of the invention is to provide a method for performing said field of application conversion with no probabilistic blocking conditions.
Still another object of the invention is to provide such a method and system architecture based on various approaches to modeling.

These and other objects and advantages of the invention will be more readily ascertained from the following detailed description when read in conjunction with the accompanying drawings.

Naturally, eventhough applicable to a large domain of applications as mentioned above, the following description, just for the sake of simplifying the explanations, shall be made with reference to a preferred embodiment in the speech recognition area of application wherein the pronounced word is predicted from previous ones. It should howewer be understood that this should, in no way, imply a limitation of the present invention to that specific type of implementation involving the specific types of source and target informations of the herein considered preferred embodiment.

### BRIEF DESCRIPTION OF THE DRAWINGS

Figure 1 is a block diagram of a speech recognition system wherein the invention shall be implemented.

Figure 2 is a another representation of figure 1 showing a more detailed implementation of the Stack Decoder represented therein.

Figure 3 is a block diagram showing a functional representation of speech recognition operations performed with the system of both figures 1 and 2.

Figure 4 is a block digram of the device for implementing the invention within the system of figures 1 and 2.

Figure 5 is a block diagram representing the flow chart for implementing the invention.

Figure 6 is a schematic representation of one element of the invention.

### DETAILED DESCRIPTION OF A PREFERRED EMBODIMENT OF THE INVENTION

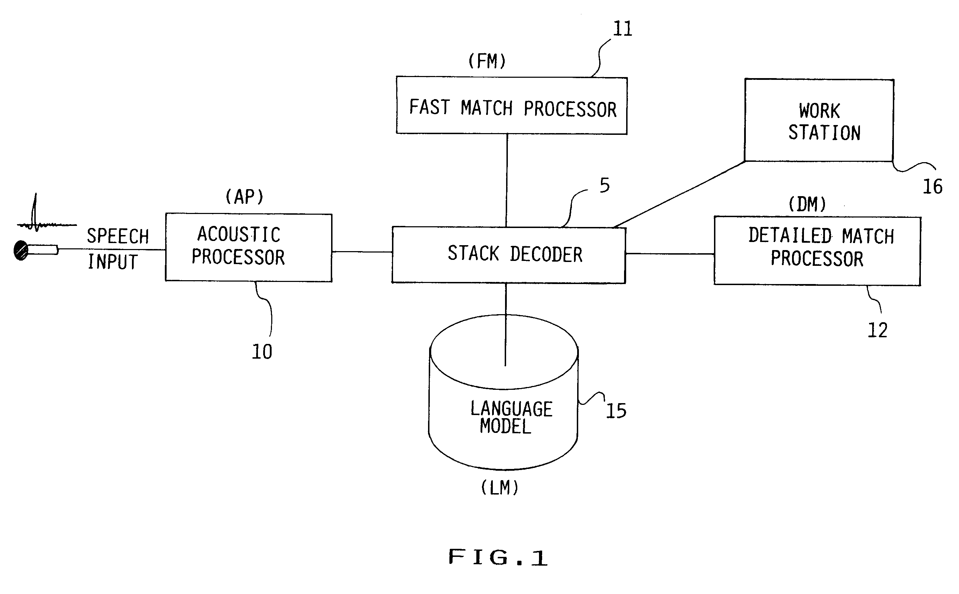

Represented in figure 1 is a block diagram of a speech recognition system. Such a system is described in a copending European Application No 0 238 695. The system includes a Stack Decoder 5 to which are connected : an Acoustic Processor (AP) 10, a Fast Match processor (FM) 11, a Detailed Match processor (DM) 12, a Language Model (LM) 15 and a workstation. Obviously the workstation would provide a both-ways man-machine interface. Such a workstation shall be used for both providing data information during the preparation cycle used to settle the machine for further performing application and also as the-man-to-system interface during the cycle of operating the system for its final intended use.

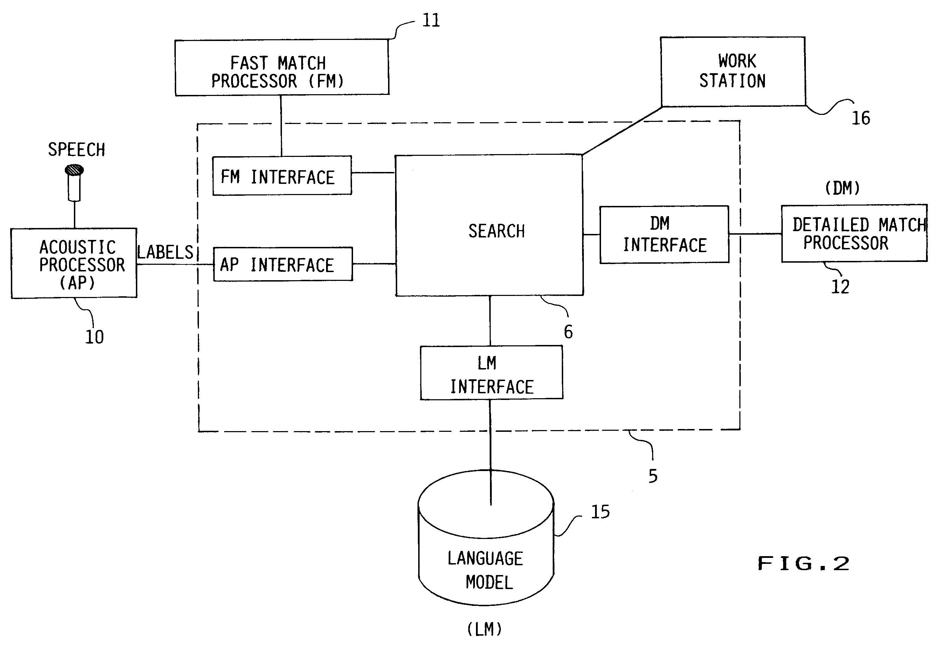

The Acoustic Processor (AP) is designed to transform a speech waveform input 1, fed through a microphone, into a string of labels 11, 12, 13, ..., or fenemes each of which identifies a corresponding sound type or classe, e. g. liε{1, 2, 3, .... 200}. In this system the Accoustic Processor (AP) is based on a unique model of the human ear and is described in the European Patent Application No 85-111905.7, entitled : "Non-linear Signal Processing in a Speech Recognition System".
The labels from the Acoustic Processor (AP) enter the Stack Decoder. Functionally, the Stack Decoder may be represented as shown in figure 2.
The main Stack Decoder element is a search element which communicates through interfaces, with the Acoustic Processor (AP), the Fast Match (FM) processor, the Detailed Match (DM) processor and the Language Model (LM) processor.

In operation, labels from the Acoustic Processor (AP) are directed by the Search element to the Fast Match (FM) Processor. The Fast Match process is described in Copending European Application published under number 238 689 and entitled "Method and Apparatus for Performing Acoustic Matching in a Speech Recognition System". Briefly stated the object of fast matching is to determine the most likely word (or words) for a given string of labels. For instance, determine a list of 200 candidate words for a portion of signal, by examining words in a vocabulary of words and reducing the number of candidate words for a given string of incoming labels. The Fast Match is based on probabilistic finite state machines, also referred to as Markov models.

Once reduced the number of candidates by using the Fast Match (FM), the Stack Decoder (SD) communicates with the Language Model (LM) which determines the contextual likelihood of each candidate word in the Fast Match candidate list based on existing so called n-grams, sequences of "n" consecutive words. Language Modeling shall be described hereunder in full details.
As already mentioned, the invention also applies to other approaches to Modeling, e.g. Grammatical Modeling, or modelings based on spell-to-sound rules, allophone selection, morphological analysis, etc.... The following description will however refer to Language Modeling for the sake of simplifying the description of the preferred mode of implementation.

Preferably, the Detailed Match (DM) operation examines, then, those words from the Fast Match candidate list which have a reasonable likelihood of being the spoken word based on the language model structure. A Detailed Match (DM) operation is described in the above mentioned European Application entitled "Method and Apparatus for Performing Acoustic Matching in a Speech Recognition System".

After the Detailed Match is performed, the Language Model (LM) is, preferably, again invoked to further determine word likelihood.

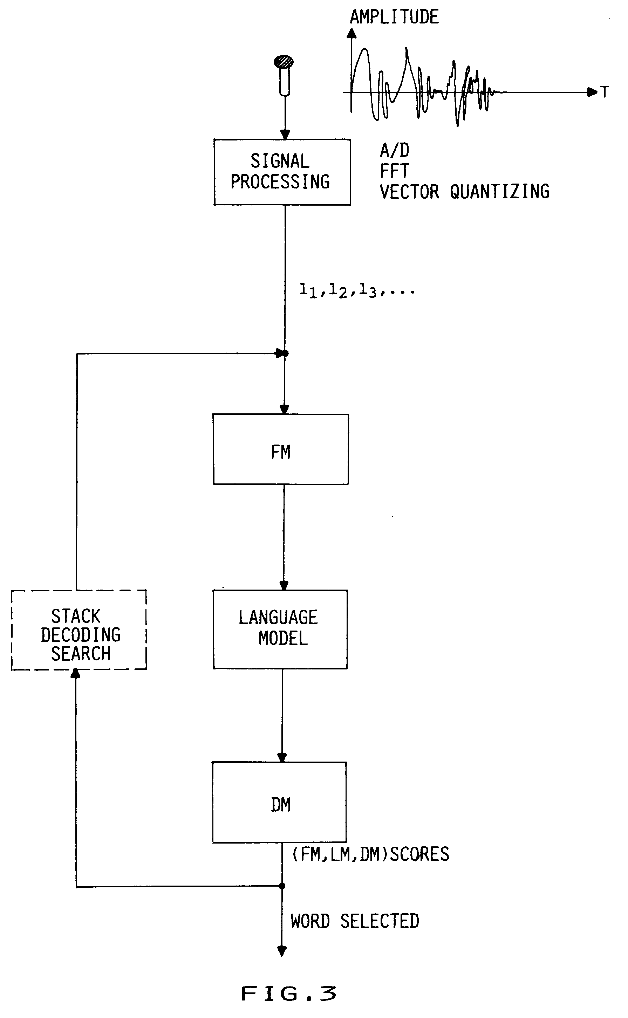

The above system operation may be summarized into a fonctional diagram as represented in figure 3. The voice signal amplitude versus time provided by a microphone as represented in the upper part of figure 3, is first submitted to a so-called signal processing operation. In fact one should say signal processing operations, since, as one could derive from the above cited references, this processing includes, for instance, conventional analog-to-digital conversion operations, Fast Fourier Transform (FFT) operations, acoustic modeling operations (such as ear modeling), and vector quantizing operations. This leads finally to providing a flow of labels l1, l2, l3, etc. each label lᵢ belonging to a set of,say, 200 labels, for each 1/100 second.

The next operation is the so-called Fast Match operation. This Fast Match operation involves considering a vocabulary of, say 20 000 words within a file derived from both orthograph and phonetic considerations. The fast match operation may also involve a locutor voice modeling. A fast match operation provides a list of, say, 200 words or so-called candidates per portion of considered voice signal. Those 200 candidate words are then submitted to a tree-structured language model to derive therefrom so called acoustic and linguistic scores to be submitted to the next step, i. e. the detailed match step. The detailed match operation is made to provide a so-called detailed match acoustic score. Those fast match, language modeling operation, and detailed match are to be combined together to finally lead to the selection of the right word matching with the portion of the considered speech signal provided by the microphone. In practice, and as one could easily understand, and/or derive from the prior art cited above, the process leading to the choice of the right words best matching the spoken words looked for, needs repetitive operation of those 3 steps: fast matching, language modeling and detailed match through the stack decoding operation.

The language modeling operation is the so-called field dependent step of the process. This step involves a field dependent tree-structured reference base for the statistical approach to the problem, with reference to the application field dependent data base. Apparently, so-called modeling enabling further decision making operations, when operating the system for its intended use, is a crucial item for the approach considered herein and even for any approach mentioned above, be it based on language modeling, grammatical modeling or else. However, let's again repeate that the following description shall refer to language modeling just for the sake of giving a clear description of the invention.

What makes the above described architecture particularly attractive, is that, assuming a data base is used to store textual information representative of a given target field of application and assuming a powerful, and yet efficient in all cases (i.e. with no aberration or blocking condition), method is provided to convert the data base contents into a language model (decision tree, as will be described later on) that could be used by the speech recognition system, then the system could be converted from one field of application (e. g. medical application) to another (e. g. commercial application). Obviously, this would affect positively the commercial usefulness of the proposed system architecture, by making the "Language Modeling" operation reasonably adaptable to various fields of applications, and therefore make the whole system affordable at fairly reasonable prices when bearing in mind its potentialities.

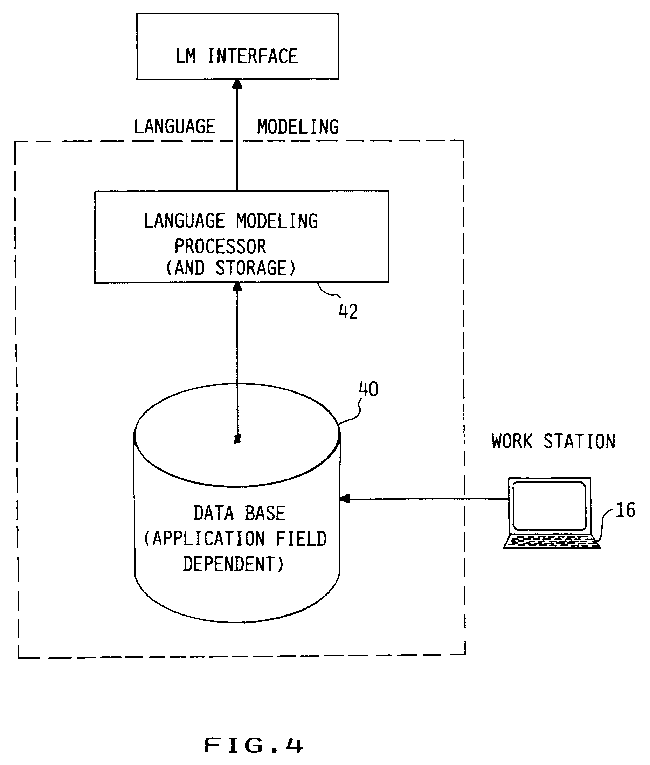

Represented in figure 4 is the Language Modeling (LM) device architecture proposed herein to achieve the adaptivity provided by the invention.

The Language Model (LM) device is now made to include a Data Base 40 for storing application dependent data, hereunder referred to as "Text Corpus". Attached to the Data Base is a workstation wich enables entering, and/or amending, the Data Base contents in case of need, to convert the system to a different client/application , for instance. Obviously one could also use the workstation 16 already attached to the system represented in figure 1. The application dependent data base is also connected to a Language Modeling Processor 42 made to process the text corpus and provide the Language Model in the adequate format (tree) for the system of figures 1 and 2, capable of operating, for instance in the system described in the above mentioned European Application published under No 0 238 695. Both text Data Base and Language Modeling Processor are included in the so-called Language Model (device) of figures 1 and 2. Such a Language Model device should then be connected to the Language Model (LM) interface. In summary the Language Modeling processor should provide a decision tree specific to the current target application field, as represented by the application dependent Data Base contents, and store that decision tree into a Language Model storage or into the Language Model (LM) interface. The powerfulness and full efficiency of the method used to generate and store a Language Model is a key factor to enabling full achievement of the object of this invention, that is, flexibility of the system to conversion from one target field of application to another one at fairly reasonable cost.

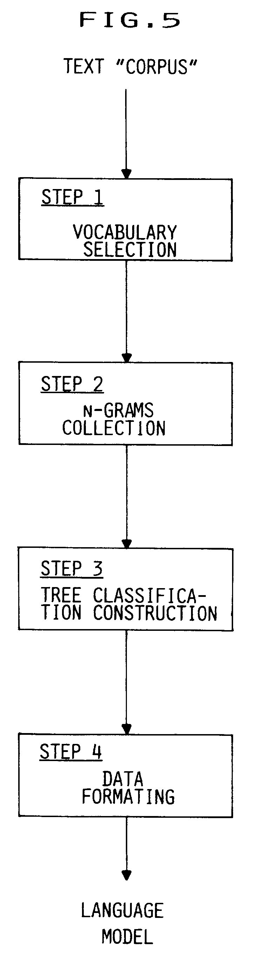

Represented in figure 5 is a general flow-chart for performing the language modeling operations. The proposed corpus of text read from the application dependent Data Base (see figure 4), is processed in a first step (Vocabulary Selection), starting with selecting a vocabulary listing the most frequent target words. This list of most frequent words is then optionally submitted to both the technician in charge of personalizing the system to the application looked for, and/or the client for whom the system is being prepared, through the attached workstation (see figure 1 and 4). The technician and/or the client may suggest vocabulary amendments through additional insertions or deletions, on a professional basis. For instance, the technician may deem useful to add numbers, ponctuations, measuring units, etc..., while the client may amend word spelling to match with most frequent word spellings in his profession, or add or delete words, etc.... These facilities are, as already mentioned, additional optional facilities which could easily be provided given the proposed system architecture and method for personalizing said system, at no extra-cost. The overall step 1 operation shall be referred to as "Vocabulary Selection". In a preferred embodiment of this invention the vocabulary selection has been implemented to provide a list of, say, 20 to 25 000 words.

The next step (step 2) involves collecting n-grams from the selected vocabulary. This operation is essentially performed to define and store into the Language Modeling facility, the frequency of occurences of the different n-grams; that is the frequency of occurence of given sequences of "n" consecutive words into said list of 25 kilo-words. For instance, in a preferred embodiment, "n" might be selected for being equal to 3 or 5 or 10. This step 2, shall be referred to as "n-grams Collection".

The Language Modeling process switches then to step 3 wherein the "Tree-Classification" is constructed . Therefore the step 3 shall be referred to as "Tree-classification Construction". A theorem has been suggested by P. A. Chou in "Application of Information Theory to Pattern Recognition and the design of Decision Trees and Trellis", PhD Thesis, Stanford University, June 1988. Unfortunately this theorem might lead to blocking situations under normal operating conditions, which, obviously, from a practical standpoint, is a main drawback.

Finally, to make the system of the invention and the method, fully implementable in the IBM System referred to in the above mentionned prior art, a fourth step referred to as "Data Formating Step" shall be used. Obviously, this data formating step is not fundamental to the invention. It will however, be described hereunder, as will also be the three previous steps mentioned above, for sake of completeness of the description of the best embodiment of this invention.

The above four-steps process shall now be described in full details and illustrated whith few examples to help understanding the invention.

Let us first remind that the method of the invention, as applied to the best mode of implementation of the selected example, involves transforming a set of texts which are typical of a user's field of application (for exemple : radiology reports, business correspondence, etc.), into a so-called Language Model which can be used by the speech recognition system, and more particularly by the IBM Speech Recognition System as disclosed in the above cited references.

Starting from the set of texts (also called "corpus'), this transformation is performed in the four-steps process.

The corpus of texts is generally composed of a set of files where the text appears in character form. These files are concatenated (at least conceptually) so that the corpus can be seen as a long sequence of words
w1, w2, w3.............,w_{T}
Ponctuation signs are also generally considered as words. The order in which the files are concatenated is not important, because it is observed experimentally that, when they are ordered differently, the quality of the resulting Language Model remains practically the same. Just for sake of illustration let us give an example, a trivial example one should say, of a corpus containing 2 files :
file 1 : "La cigale et la fourmi."
file 2 : La cigale, ayant chanté tout l'été.

This corpus is viewed as a sequence of 17 words :

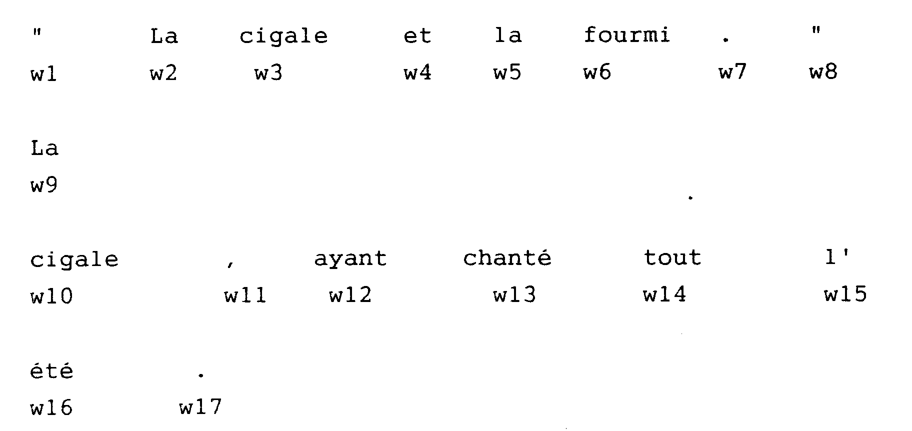

As already mentioned, this is but a trivial example just to illustrate the process. In practice, the text corpuses are very large, containing for instance several million words. Also different words could be added like for editing purposes. For instance it is possible to add a special word, the "sentence mark" at the end of each sentence.

Needless to remind that the corpus of text may be entered into the application dependent data base through the workstation attached to the Language Modeling System, as represented in figure 4. Let us now discribe in full details the steps (as represented in figure 5) made to implement the Language Modeling Operation.

### Step 1 : Vocabulary Selection :

The corpus of text w1, w2, w3 .....wT, is first processed to derive a list of different words,therefrom, together with their frequencies, that is, the number of times they appear in the corpus.

The vocabulary is then formed by selecting the most frequent words (in the above mentioned IBM System, a range of 20 - 30 000 words is allowed).

As already mentioned, and depending on the quality that is desired and the amount of effort that can be afforded, the list of most frequent words can be modified by one or several operations such as the following :
- add "mandatory words", for example some punctuation signs (which we want in the vocabulary even if they are not very frequent in the corpus), digits and certain numbers, first names, geographical names, etc.
- edit the list by potential users, for example to correct spellings, to remove multiple spellings of the same word (like electrocardiogram and electro-cardiogram, for instance),
- complete : add the plural form of a word whose singular form is in the list. This is useful in French where these forms are generally homophones. This makes the vocabulary appear to be more consistent. Other inflections can be added as well (for example verbs),
- add words required by the user, for example list of user names, units, specialized technical terms, etc.

### Step 2 - Collection of n-gram frequencies:

In practice, the character string representation of the corpus w₁ .... w_{T} is replaced by a representation where each word is replaced by its position number in the vocabulary. This operation is apparented to a coding on the vocabulary. The vocabulary contains a special word called "unknown word" and the words of the corpus which do not appear in the vocabulary are replaced by the position number of "unknown word".

As mentioned in the IBM System cited in reference, the unknown word is generally assigned position 0 and spelling 〈??〉

### Example : let the vocabulary contain 4 words :

| Position | Spelling |
|---|---|
| 0 | 〈??〉 |
| 1 | la |
| 2 | cigale |
| 3 | . |

The previous corpus will be represented as the list of 17 numbers : 0 1 2 0 1 0 3 0 1 2 0 0 0 0 0 0 3
(When stored on a computer, this representation by numbers can further be compressed to save storage using conventional means)
Let the vocabulary contain V words (generally V≈ 20 000) with position numbers ranging from 0 to V-1. We want now to know the frequency of occurence of a given sequence of words x₁... xₙ (called n-gram) in the corpus. There are Vⁿ possible sequences. Generally, only a small fraction of these do actually occur.

Frequencies can be computed in the following way : use a counter c (x₁... xₙ) for each possible n-gram, counter whose initial value is 0. Consider a window of n consecutive words in the corpus, window initially located at the beginning of the corpus. Increment the counter of the n-gram which is visible in the window by 1, then shift the window by one position. Repeat this until the window has reached the end of the corpus.
Note : for consistency, the window is initially located so that its right most element is the first word of the corpus. Positions in the corpus before the first word are considered to be either "sentence mark", or some punctuation sign (such as period), or other.

### Example : collect 2-grams

The corpus of the above cited example is: 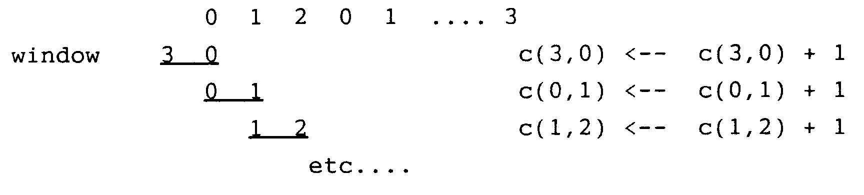
In this case, there are 16 counters c(0,0) ... c(3,3), which are initially set to zero.

In this example, the result is the table of 2-gram frequencies (counters)

| | | | | |
|---|---|---|---|---|
| c | 0 | 1 | 2 | 3 |
| 0 | 5 | 3 | 0 | 2 |
| 1 | 1 | 0 | 2 | 0 |
| 2 | 2 | 0 | 0 | 0 |
| 3 | 2 | 0 | 0 | 0 |

This table can generally be compressed by coding only non-zero values.

| **x₁** | **x₂** | **c(x₁ x₂)** |
|---|---|---|
| 0 | 0 | 5 |
| 0 | 1 | 3 |
| 0 | 3 | 2 |
| 1 | 0 | 1 |
| 1 | 2 | 2 |
| 2 | 0 | 2 |
| 3 | 0 | 2 |

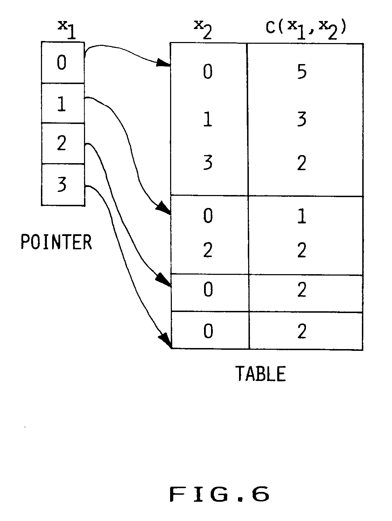

which already saves storage. Then, further compression is achievable using, for instance, indirect addressing wherein x₁ is used as a pointer (see figure 6). This might look trivial on the above example, but one should remember that in practice, for instance with the IBM system cited in the references, V= 20 000, then Vⁿ is such a large number that it is impossible to have enough memory to store all possible counters. Since only a "small" number of n-grams do occur, most counters always have a value of 0 (if the corpus contains 1 M words, there cannot be more than 1 M different n-grams). It is therefore interesting to use indexed data structures so that only non-zero counters are physically allocated storage, and then use conventional indirect addressing techniques to further save memory and operating cycles.

### Step 3 - Construction of tree-based classification

In Language Modeling technique one tries to predict the value of xₙ from the values of x₁ ... xₙ₋₁. In the n-gram (x₁... xₙ), the part (x₁... xₙ₋₁) is called the context, and xₙ is the element to be predicted. A context has n-1 positions, from position 1 to position n-1.

In tree-based classification, we try to keep together contexts (x₁ ... xₙ₋₁) which are followed by similar values of xₙ.

Initially, we put all contexts in a single class. This class is partitioned into 2 sub-classes, then iteratively each of these sub-classes is also partitioned so that the classification gets more and more precise.

Several stopping criteria allow to decide when to stop partitioning. In practice, this classification can be performed as follows :
we use the frequencies c(x₁ x₂ ... xₙ) which have been computed already. We also use an array class (x₁... xₙ₋₁) which indicates the class number of each context. This array is updated during the construction. We use a variable nclass which indicates the number of classes built so far.
Based on the above, any programmer, given the following instructions, may then build easily the programs for implementing the Tree-based classification construction.

### Initialisation : (there is only one class including all the words)

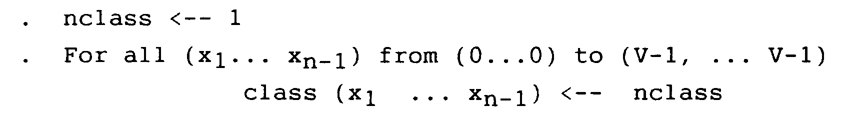

### Iterations (tree construction)

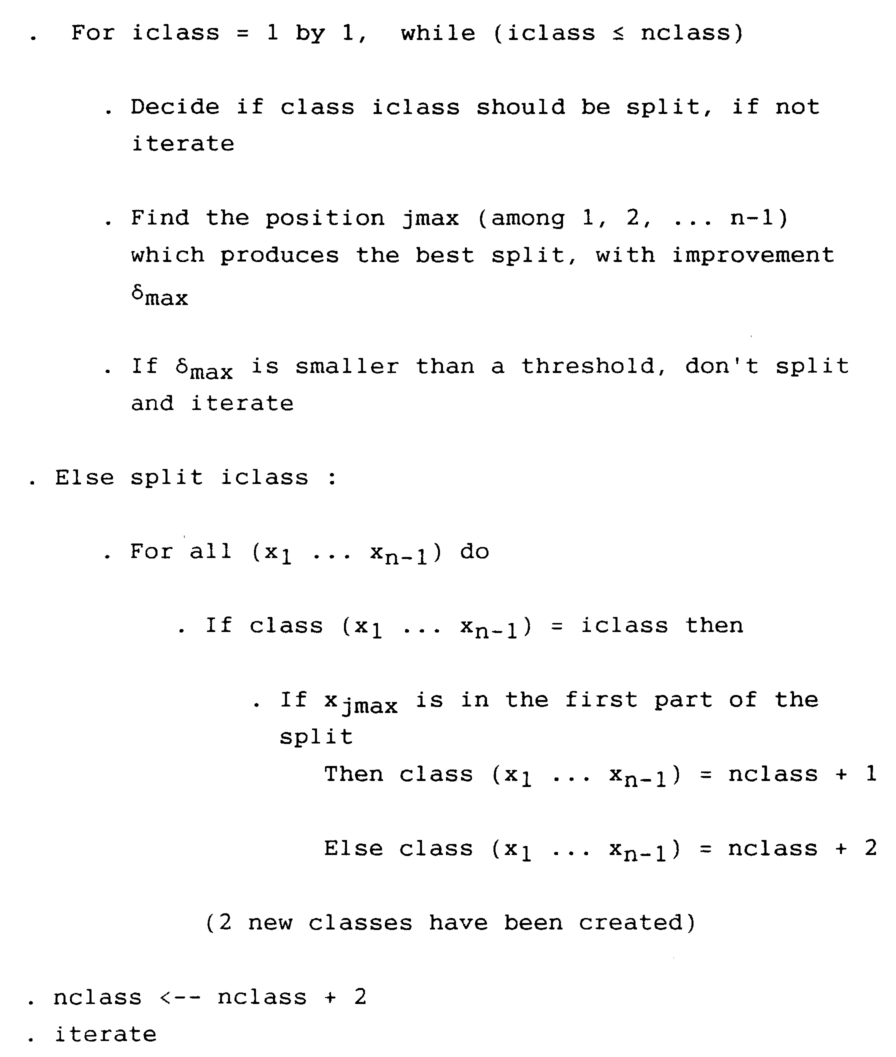

### Detailed description of each step in the iteration:

### (1) decide if class "iclass" should be split:

(As already mentioned, several criteria can be used); for instance, either:
(a) The size of the class has to be larger than a threshold (to avoid splitting already small enough classes). The size can be computed by : 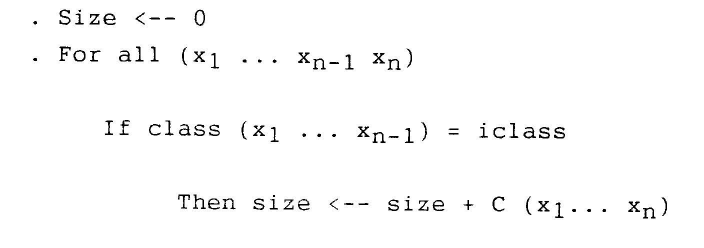
   Or,
(b) The total number of classes created has to be smaller than a maximum (generally because of storage limitations)
The value of the treshold is found experimentally, depending on the nature of the data and the ressources (computation and storage) that we want to devote to the construction.

### (2) Find the position jmax which produces the best split

This corresponds to the search for the maximum in a linear array

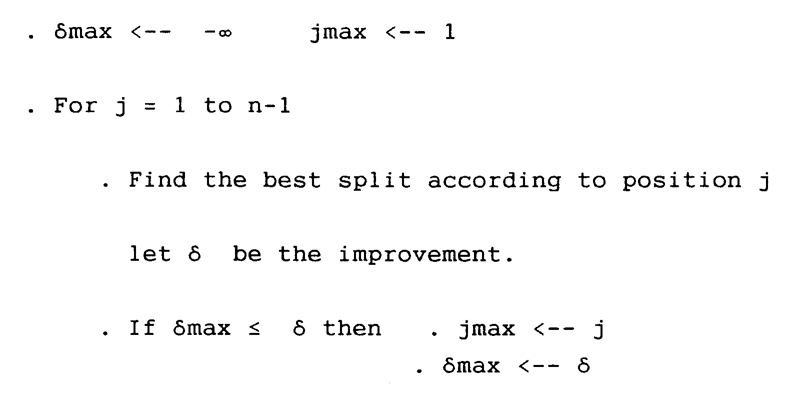

### (3) Find the best split according to position j

Depending on the value of xⱼ, we will say that context (x₁ ... xₙ₋₁) is in the first or second part of the split. Therefore, we use an array of V elements (part (0) part (1)... part (V-1)), each element having value 1 or 2. The best split is constructed iteratively :

### initialisation :

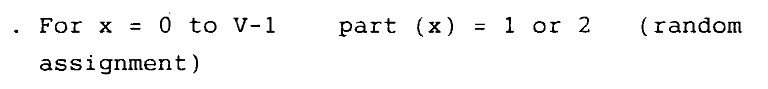

### iteration :

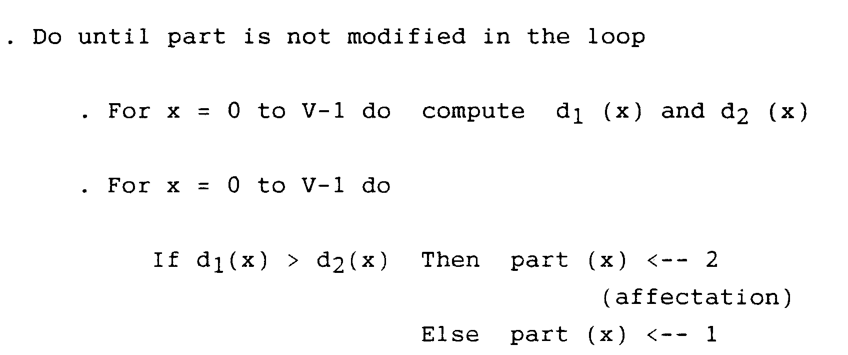

### Computation of d₁ (x)

### Mathematically :

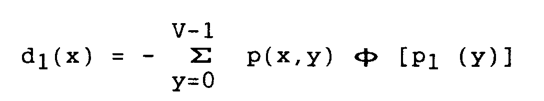

with the following definitions: 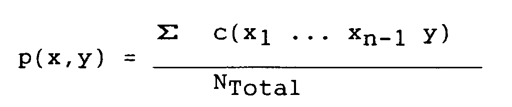
where the summation is taken over all contexts (x₁ ... xₙ₋₁) such that xⱼ = x , and N_{Total} is the size of the class to be partitioned. 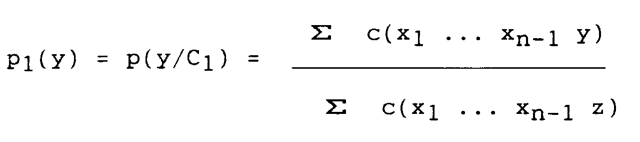
In the numerator, the summation is taken over all contexts (x₁ ... xₙ₋₁), wher xⱼ belongs to C₁;
In the denominator, the summation is taken over all contexts when xⱼ belongs to C₁ and over all possible values of z from 0 to V-1.

For a programmer d₁(x) can be computed with the sequence of instructions :

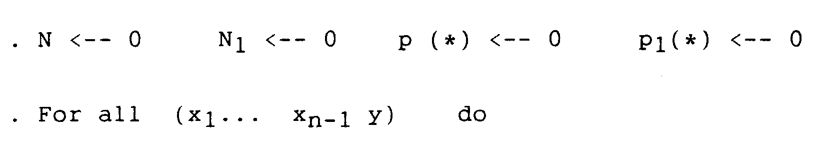

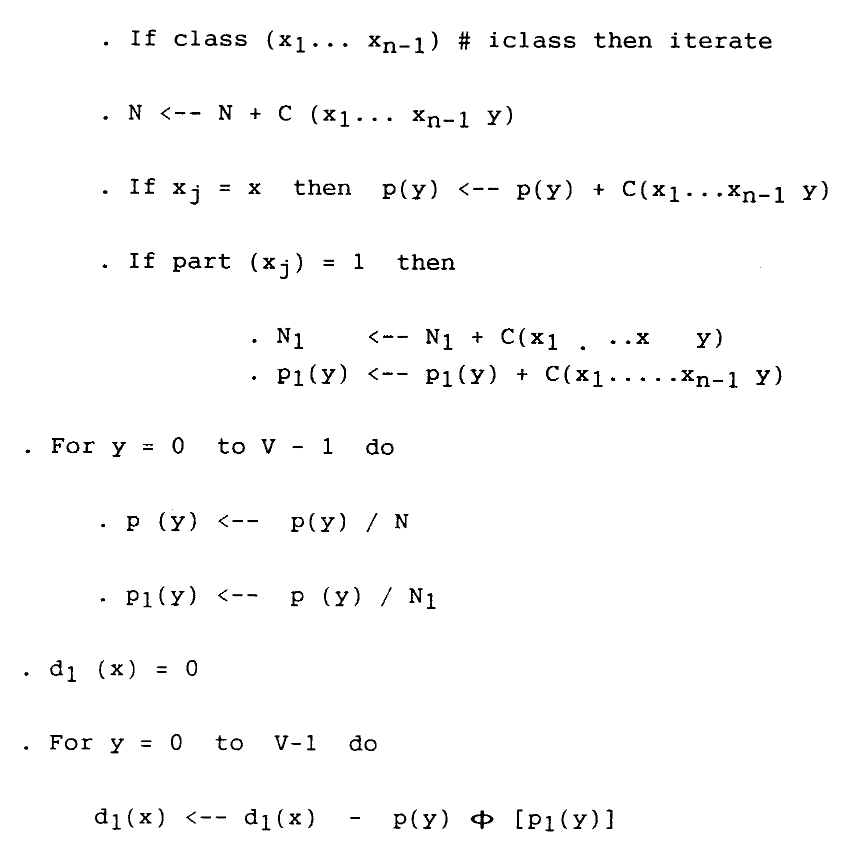

### Description of Φ[p]

The function Φ is a selected so that it does not lead to any blocking condition under normal operating conditions leading to probabilities equal to zero (in which case the Log₂ function would become infinite).
Said function is defined by: 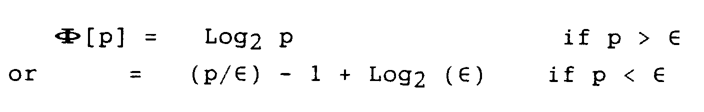
This particularly efficient selection shows mathematically that the choice

$\text{ε = [min p(x,y)]²}$

where the minimum is taken over all non-zero value of p(x,y), is valid. In that case,

$\text{Φ [0] = 2 Log [min p(x,y)] - 1}$

### Computation of d₂(x)

### Mathematically :

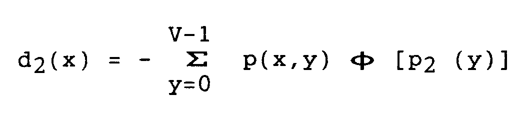

with the following definitions: 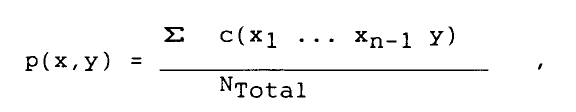
has the same definition as indicated in the description of d₁(x). 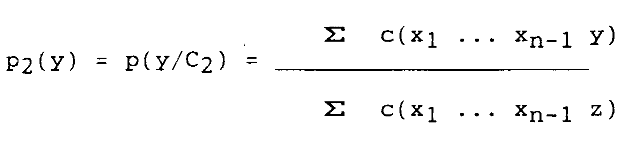
In the numerator, the summation is taken over all contexts (x₁ ... xₙ₋₁), wher xⱼ belongs to C₂;
In the denominator, the summation is taken over all contexts (x₁ ...xₙ₋₁) when xⱼ belongs to C₂ and over all possible values of z from 0 to V-1.
d₂(x) can be computed with the sequence of instructions :

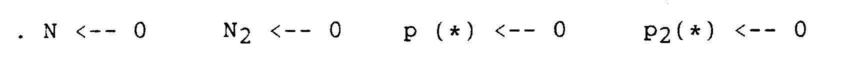

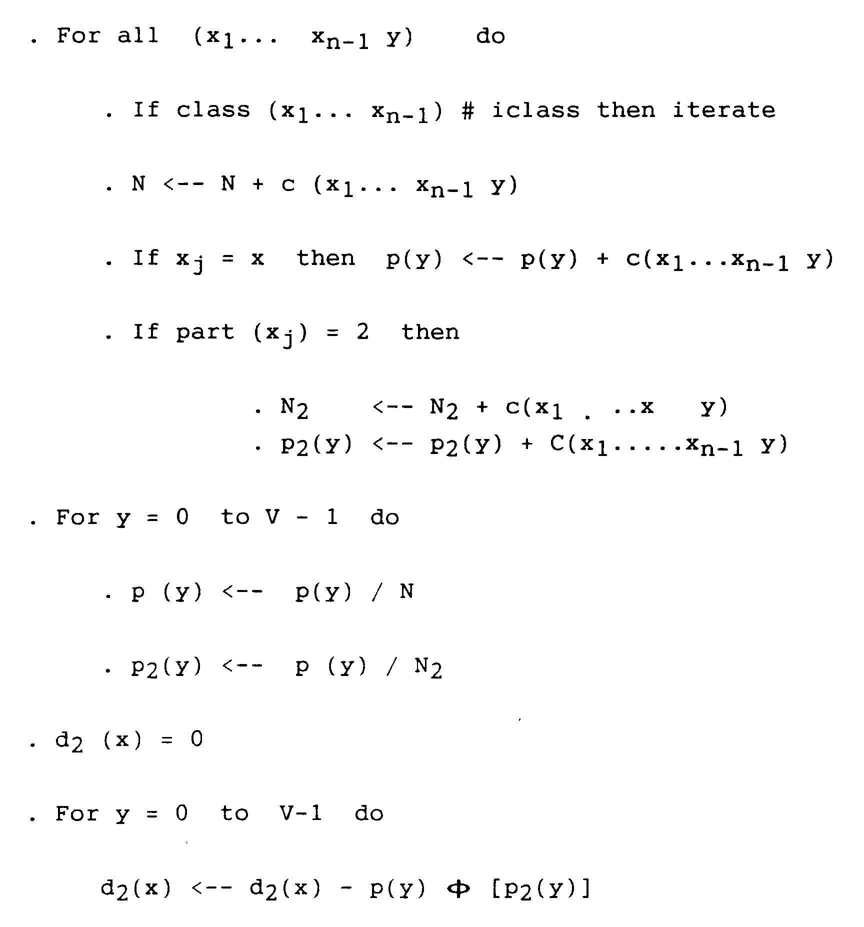

### Computation of the improvement δ

For a given split (that is a given set of values for the array part) we compute : 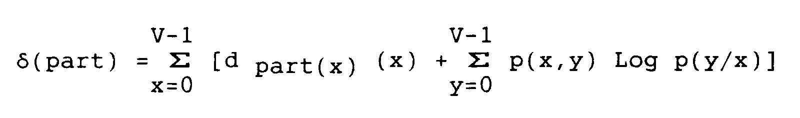
The improvement δ is the value of δ (part) for the final value of the array part at the end of the iterations.

To help fully understand some essential step of the Language Modeling operation, let's take an example. This example shall, naturally be limited to a very short "corpus" (i. e. a 3 word vocabulary) and therefore be trivial as per its usefulness, and yet be fully explanatory of the present method.

Let's assume a 3 word vocabulary {a, b, c} and let the table of 2-gram frequencies be :

| C x\y | a | b | c |
|---|---|---|---|
| a | 30 | 30 | 1 |
| b | 1 | 1 | 30 |
| c | 0 | 2 | 5 |

Now, instead of starting the tree classification construction from scratch, let's assume we started with a random two sub-classes (C₁ and C₂ ) affectation, and let's assume a and b are both set to be initially in class C₁ while c is assigned to class C₂ . In other words :

$\text{C₁ = {a, b} C₂ = {c}.}$

Let's now compute the distances of each corpus word relative to the sub-classes :
- For "a", the system computes :

   $\text{d₁ (a) = - p(a,a) φ [p(a/C₁ )] - p(a,b) φ[p(b/C₁ )] - p(a,c) φ[p(c/C₁)]}$

   The size of C₁ is :

   ${\text{N}}_{\text{C1}} \text{= 30+30+1+1+1+30 = 93}$

   The size of C₂ is :

   ${\text{N}}_{\text{C2}} \text{= 0 + 2 + 5 = 7}$

   The total count is : 93 + 7 = 100

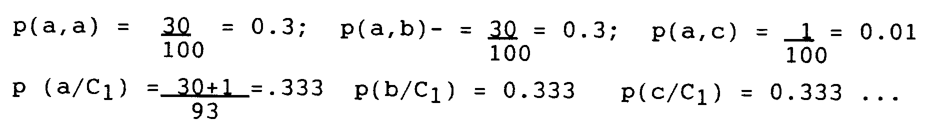

The test performed on p(a/C₁ ) , p(b/C₁ ) and p(c/C₁ ) shows that non of these is equal to zero, therefore the function φ is selected to be of the Log₂ form

$\text{d1(a) = - 0.3 φ [0.333] - 0.3 φ [0.333] - 0.01 φ [0.333]}$
$\text{= + 0.3 x 0.6883 + 0.3 x 0.6883 + 0.01 x 0.6883}$
$\text{= 0.4199}$

Similarly, d₂(a) shall be given by :

$\text{d₂(a) = - p(a,a)φ [p(a/C₂)] - p(a,b)φ [p(b/C₂)] - p(a,c) φ[p(b/C₂)]}$
$\text{p(a/C₂) = 0 ; p(b/C2) = 2/7 and p(c/C2) = 5/7}$

Here the computation of φ for p(a/C₂) switches to : 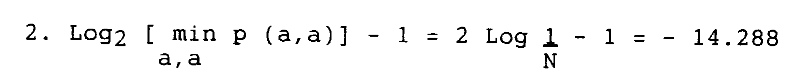
$\text{φ [p(b/C₂)] = - 0.785 and φ [p(c/C₂)] = - 0.211}$
$\text{d₂(a) = 0.3 x 14.288 + 0.3 x 0.785 + 0.01 x 0.211 = 4.524}$

Since d₁(a) < d₂(a) , "a" remains in sub-class C₁
- A similar approach would lead to :
   d₁(b) = 0.220 and d₂(b) = 0.214 ; consequently b would switch to classe C₂.
   d₁(c) = 0.048 > d₂(c) = 0.026 and c remains in class C₂.
   The tree should then be :

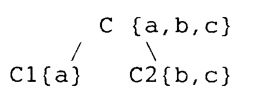

### (4) Structuring of the data into a format which is usuable in the IBM system of the above cited references :

To use a Language Model, we need to be able to compute the probability p(y/x₁ ... xₙ₋₁) from the n-gram frequencies and the tree-based classification, wherein y is the unknown incoming word preceded by x₁ ...xₙ₋₁. During the construction process, we keep the following values for each class iclass ; i.e. values or parameters useless to the tree construction but needed when operating the speech recognition system for its intended use.
- . Position (iclass) :: the jmax position value which gives the best split for iclass. If iclass is not split, we code position (iclass) = 0 (then iclass is a leaf of the tree)
- . Part (iclass, x): The array part corresponding to the best split for the class iclass. each value is either 1 or 2.
- . Son₁ (iclass) (Son₂(iclass)): the numbers of the sub-classes obtained by splitting iclass. (These are the values of (nclass + 1) and (nclass + 2) at the time of iteration iclass, as developed above).
- . p(iclass, y): the probability of y (0 to V-1) given the class iclass (it is computed even if the class is not split)

These parameters are therefore stored during the tree construction, to be used when, later on, moving through the tree to identify "y" based on the context.

This last value can be computed with the sequence (during iteration iclass) :

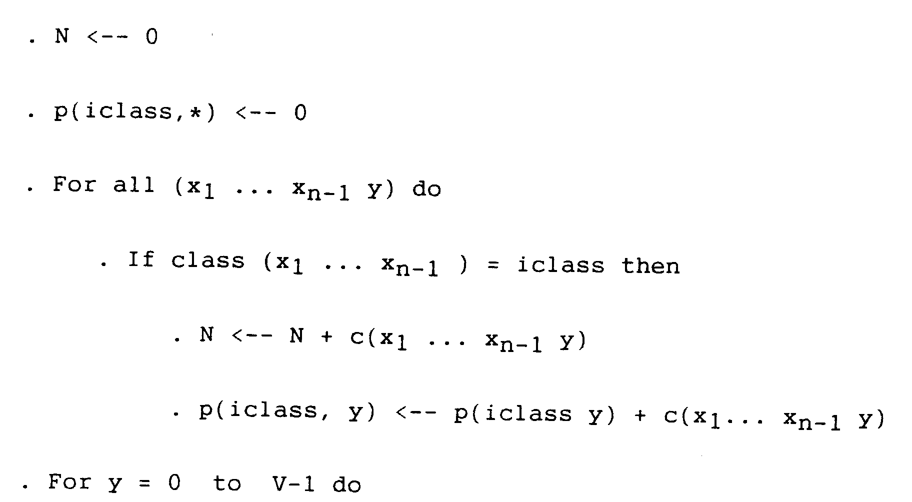

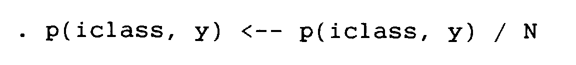

### Description of (LM) processor

This is the part of the mentioned IBM reference system that will use the previous data x₁ ... xₙ₋₁ to score "y" by providing the probability p(y/x₁ ... xₙ₋₁) to the Stack Decoder (SD).

In operation, the (LM) processor will perform : 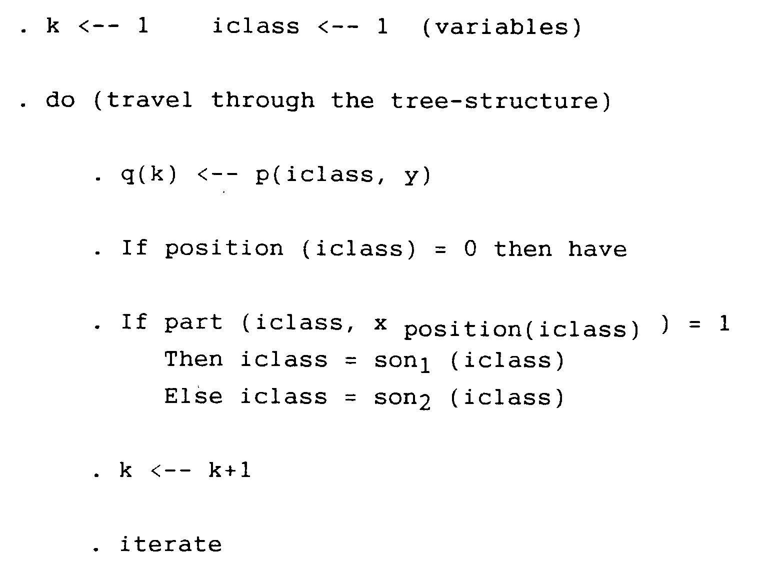
At the end of the loop, we have the values of k, q(1), q(2), ... q(k) and iclass. The probability itself is then computed by : 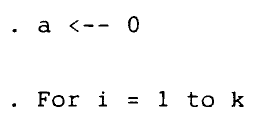 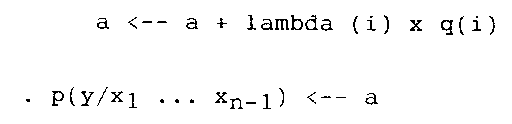
The coefficients lambda (i) can be :
- either uniform lambda (i) = 1/k
- or precomputed by the algorithm "deleted interpolation" (standard algorithm described in the cited references).

## Claims

1. An improved method for implementing and/or amending a target field dependent Model for an intelligent machine the operation of which is based on statistical approaches for converting input data from a source type of information into a target type of information, said method including:
- storing a set of application field dependent files including words and/or symbols, thereby constituting a so-called corpus;
- optionally performing a so-called vocabulary selection by deriving from said corpus, a list of most frequent words and/or symbols;
- providing an operator with the ability for amending, if required, said selected vocabulary;
- optionally constructing a binary representation of the corpus by replacing each word by its position number in said selected vocabulary, then optionally compressing the representation using data compressing techniques;
- scanning said words or binary representations of words or symbols, and deriving therefrom the frequencies of so-called n-grams, i.e. sequencies of a predefined number "n" of words and/or symbols, and storing said n-grams frequency counts into a table;
- deriving a tree-based construction from said n-grams collection, said tree contruction involving:
a) putting all selected vocabulary words and/or symbols into a first unique class C; then,
b) splitting said first class into two sub-classes C₁ and C₂, and assigning, through an iterative process, each word and/or symbol to one of said classes C₁ and C₂, based on the content of said n-grams frequencies;
c) computing for each sub-class C₁ and C₂ word and/or symbol "x", the distance relative to each sub-class C₁ and C₂, i.e. distances d₁ and d₂ respectively, wherein said distance parameters are derived from: 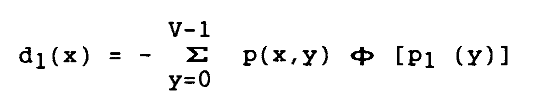 with the following definitions: 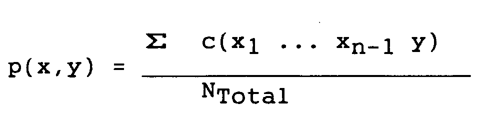 where the summation is taken over all contexts (x₁ ... xₙ₋₁) such that xⱼ = x , and N_{Total} is the size of the class to be partitioned, 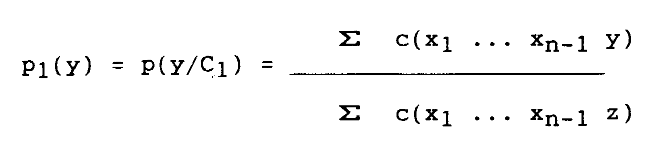 the summation in the numerator being taken over all contexts (x₁ ... xₙ₋₁), where xⱼ belongs to C₁; and, the summation in th denominator being taken over all contexts when xⱼ belongs to C₁ and over all possible values of z from 0 to V-1, 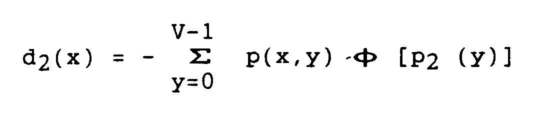 with the following definitions: 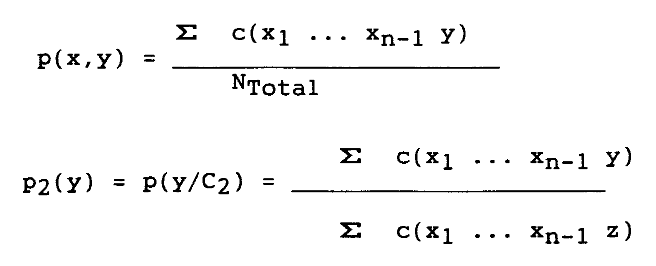 the summation in the numerator being taken over all contexts (x₁ ... xₙ₋₁), where xⱼ belongs to C₂; and,
the summation in the denominator being taken over all contexts (x₁ ...xₙ₋₁) when xⱼ belongs to C₂ and over all possible values of z from 0 to V-1; 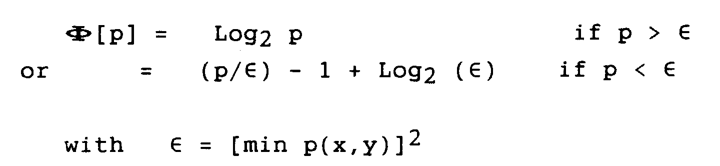 where the minimum is taken over all non-zero values of p(x,y), in which case,
$\text{Φ[0] = 2 Log [min p(x,y)] - 1}$
d) reclassifying "x" based on the shortest distance d₁ or d₂;
e) testing each sub-class C₁ and C₂ and deciding based on a predefined criteria, whether the considered class should be split any further; and, in case of any further split requirement, repeating said steps b) through e).

2. A method according to claim 1 wherein said criteria for further split is based on the considered class size with respect to a predefined class threshold.

3. A method according to claim 1 wherein said criteria is based on the total number of classes defining said tree, with respect to a predefined total number of classes.

4. A method according to anyone of claims 1 through 3 wherein said source information is speech and said target information is text.

5. A method according to claim 4 wherein said words and/or symbols are derived from text corpus including field application dependent files, whereby said Model represents a so-called Language Model (LM).

6. A method according to claim 3 wherein said symbols are derived from grammatical rules, whereby said Model is a grammatical model.

7. A method according to claim 3 wherein said symbols are derived from spell-to-sound rules to derive a Model based on predicting how a letter is pronounced depending on the context where it appears.

8. A method according to claim 3 wherein said symbols are derived from allophone selection rules to derive a Model based on predicting how a phone is pronounced depending on the context where it appears.

9. A method according to claim 3 wherein said symbols are derived from morphological analysis to derive a Model based on predicting the part-of-speech based on the spelling of the word.

10. A method according to any one of claims 5 through 9 wherein said storing into a Data Base is made amendable to enable focusing the Model to the specific target field of application considered.

11. A method according to claim 10 wherein said "n" value is set to 3.

12. A method according to claim 10 wherein said "n" value is set to 5.

13. A method according to claim 10 wherein said "n" value is set to 10.

14. A speech recognition system to convert speech source information into a displayable target information, said system including an Acoustic Processor (AP) for converting the speech signal into a string of labels, a stack decoder connected to said Acoustic Processor, a Fast Match (FM) processor connected to said Stack Decoder (SD), a detailed Match (DM) processor connected to said Stack Decoder, and a Language Modeling (LM) device connected to said Stack Decoder, said system being characterized in that said Language Modeling device includes:
- a Data base;
- a Language Modeling processor connected to said Data Base;
- storage means connected to said Language Modeling processor;
- a workstation or terminal connected to said Data Base;
- means for storing into daid Data Base a set of application field dependent files including words and/or symbols, thereby constituting a so-called corpus,
- means for performing within said Language Modeling processor, a so-called vocabulary selection by deriving from said corpus, a list of most frequent words and/or symbols;
- prompt means for providing an operator with the ability for amending, if required, said selected vocabulary through said workstation terminal;
- means for optionally constructing a binary representation of the corpus by replacing each word by its position number in said selected vocabulary, then optionally compressing this representation using conventional data compression techniques;
- means for scanning said words, or binary representation of words, or symbols and deriving therefrom the frequencies of so-called n-grams, i.e. sequencies of a predefined number "n" of words and/or symbols, and storing said n-grams frequency counts into a table within said Language Modeling storage means;
- software based means within said Languge modeling processor for generating, and storing into said Language Modeling storage means, a tree-based construction derived from said n-grams collection, said tree contruction involving:
a) putting all selected vocabulary words and/or symbols into a first unique class C; then,
b) splitting said first class into two sub-classes C₁ and C₂, and assigning, through an iterative process, each word and/or symbol to one of said classes C₁ and C₂, based on the content of said n-grams frequencies;
c) computing for each sub-class C₁ and C₂ word and/or symbol "x", the distance relative to each sub-class C₁ and C₂, i.e. distances d₁ and d₂ respectively, wherein said distance parameters are derived from: 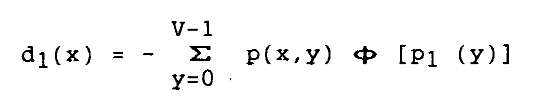 with the following definitions: 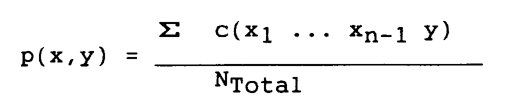 where the summation is taken over all contexts (x₁ ... xₙ₋₁) such that xⱼ = x , and N_{Total} is the size of the class to be partitioned, 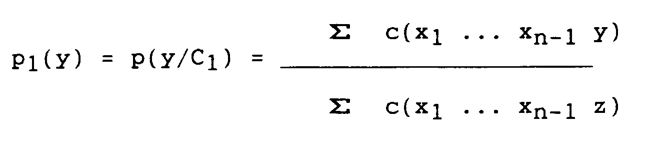 in the numerator, the summation being taken over all contexts (x₁ ... xₙ₋₁), wher xⱼ belongs to C₁; and,
in the denominator, the summation being taken over all contexts when xⱼ belongs to C₁ and over all possible values of z from 0 to V-1, 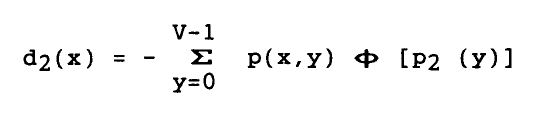 with the following definitions: 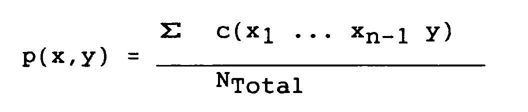 having the same definition as indicated in the description of d₁(x), 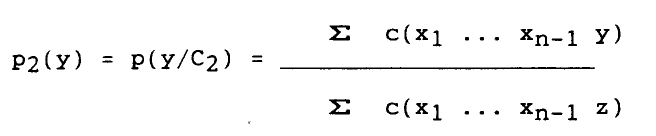 in the numerator, the summation being taken over all contexts (x₁ ... xₙ₋₁), wher xⱼ belongs to C₂; and,
in the denominator, the summation being taken over all contexts (x₁ ...xₙ₋₁) when xⱼ belongs to C₂ and over all possible values of z from 0 to V-1, 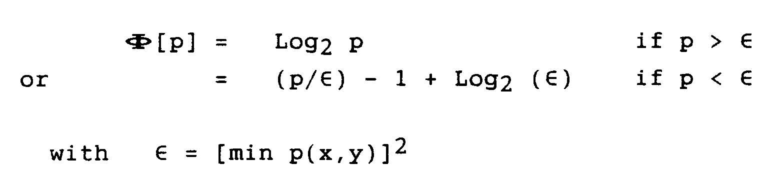
d) reclassifying "x" based on the shortest distance d₁ or d₂;
e) testing each sub-class C₁ and C₂ and deciding based on a predefined criteria, whether the considered class should be split any further; and, in case of any further split requirement, repeating said steps b) through e).
